(19) **Europäisches Patentamt**

**European Patent Office**

**Office européen des brevets**

(11) **EP 0 779 993 B1**

(12) **EUROPÄISCHE PATENTSCHRIFT**

(45) Veröffentlichungstag und Bekanntmachung des Hinweises auf die Patenterteilung:
**21.04.1999 Patentblatt 1999/16**

(21) Anmeldenummer: **95928423.3**

(22) Anmeldetag: **16.08.1995**

(51) Int Cl.⁶: **G01V 8/10**

(86) Internationale Anmeldenummer:
**PCT/DE95/01069**

(87) Internationale Veröffentlichungsnummer:
**WO 96/07937 (14.03.1996 Gazette 1996/12)**

(54) **VORRICHTUNG UND VERFAHREN ZUR ERKENNUNG VON OBJEKTEN**

DEVICE AND PROCESS FOR RECOGNISING OBJECTS

PROCEDE ET DISPOSITIF PERMETTANT DE DETECTER DES OBJETS

(84) Benannte Vertragsstaaten:
**CH DE FR IT LI**

(30) Priorität: **03.09.1994 DE 4431479**

(43) Veröffentlichungstag der Anmeldung:
**25.06.1997 Patentblatt 1997/26**

(73) Patentinhaber: **ROBERT BOSCH GMBH**
**70442 Stuttgart (DE)**

(72) Erfinder: **MESTER, Rudolf**
**D-31139 Hildesheim (DE)**

(56) Entgegenhaltungen:
**EP-A- 0 403 193          EP-A- 0 567 059**
**US-A- 5 296 852**

- **PATENT ABSTRACTS OF JAPAN vol. 9 no. 127 (P-360) ,31.Mai 1985 & JP,A,60 010112 (NIPPON DENKI KK) 19.Januar 1985,**

## Beschreibung

Stand der Technik

Die Erfindung geht aus von einem Verfahren zur Erkennung von Objekten nach der Gattung des Anspruchs 1 und einer Vorrichtung zur Erkennung von Objekten nach der Gattung des Anspruchs 12. Die Erkennung von Objekten ist in der Verkehrstechnik, der Sicherheitstechnik und in der Robotik von Bedeutung, wobei die Erkennung üblicherweise mittels optischer Meßverfahren, aktiver Abtastmethoden, Induktionsmeßverfahren oder Infrarotmeßverfahren erfolgt.

In der Verkehrstechnik werden Induktionsschleifen in die Straßenoberfläche eingebracht, die die Anzahl und die Geschwindigkeit von Fahrzeugen detektieren. Unter Verwendung spezieller Signalverarbeitungsmethoden ist es möglich, Aussagen über die Länge der Fahrzeuge und die Art der Fahrzeuge zu treffen. Die Einbringung von Induktionsschleifen in die Fahrbahnoberfläche erfordert jedoch bauliche Maßnahmen. Zudem ist für die Überwachung von komplexen Fahrzeugströmen, wie z.B. bei einer Kreuzung, eine Vielzahl von Induktionsschleifen und die dazugehörigen Auswerteeinheiten notwendig. Damit sind relativ hohe Systemkosten verbunden.

In der nicht vorveröffentlichten Patentanmeldung P 43 32 753 ist ein Verfahren zur Erkennung von bewegten Objekten beschrieben, wobei mit Hilfe einer Kamera ein Bereich in bezug auf sich bewegende Objekte überwacht wird. Bei diesem Verfahren werden von einer Kamera zeitlich aufeinanderfolgende Bilder aufgenommen. Aus zeitlich aufeinander folgenden Bildern werden Verschiebungsvektoren, Bildsignaländerung und Texturmerkmale extrahiert und durch einen Vergleich der extrahierten Verschiebungsvektoren, der Bildsignaländerungen und der Texturmerkmale wird ein sich bewegendes Objekt erkannt.

Vorteile der Erfindung

Aus der JP-A-60010112 ist eine Meßeinrichtung für den Verkehrsfluß bekannt, die mit zwei versetzt angeordneten Kameras ausgebildet ist. Die Kameras sind auf das gleiche Straßensegment ausgerichtet und erfassen beispielsweise Fahrzeuge, die sich in ihrem überschneidenden Blickwinkel befinden. Durch die Schnittbildauswertung kann das Vorhandensein eines Fahrzeuges auf dem Straßensegment, dessen Position und Höhe erfaßt werden.

Aus der EP 0 567 059 A1 ist ein Objekterfassungssystem bekannt, bei dem eine einzige Kamera Bilder von einem Straßensegment aufnimmt. Die aufgenommenen Bilder werden mit gespeicherten Bildern verglichen und daraus die Position eines Fahrzeugs, die Fahrtrichtung und Geschwindigkeit bestimmt.

Weiterhin ist aus der EP 0 403 193 Al ein Verfahren und eine Vorrichtung zur Erfassung des Verkehrs bekannt. Eine oder mehrere Kameras überwachen ein- bzw. mehrere benachbarte Straßenabschnitte und detektieren die erfaßten Objekte durch Vergleich der aufgenommenen Bilder. Dabei werden für jedes Bild die zugehörigen Bildpunkte miteinander verglichen und die Differenz der Intensität der Bildpunkte für das Vorhandensein oder Fehlen eines Fahrzeugs in dem Bildbereich bewertet.

Ein ähnliches verkehrsüberwachungsverfahren bzw. eine Vorrichtung ist ebenfalls aus der US 5,296,852 bekannt. Hier vergleicht eine Kamera nachfolgende Aufnahmen mit korrespondierenden Punkten der Aufnahme. Eine Auswerteeinheit wertet entsprechende Helligkeitsunterschiede der aufgenommenen Bildpunkte aus und bestimmt, ob sich ein Fahrzeug auf dem überwachten Straßenabschnitt befindet oder nicht.

Das erfindungsgemäße Verfahren mit den Merkmalen des Anspruchs 1 und die erfindungsgemäße Vorrichtung mit den Merkmalen des Anspruchs 12 haben demgegenüber den Vorteil, daß optische Effekte, wie z.B. Schatten, Beleuchtungsschwankungen, Scheinwerferkegel und Belichtungsänderungen nicht zu Fehldetektionen bzw. Fehlmessungen führen. Auf diese Weise werden bewegte und nicht bewegte Objekte unabhängig von äußeren Lichteinflüssen sicher erkannt. Dadurch wird die Messung der Größe der Objekte präziser. Diese Vorteile werden dadurch erreicht, daß mittels einer Anordnung von mindestens zwei optischen Signalaufnahmeeinheiten, insbesondere Kameras, die auf den gleichen Bereich gerichtet sind, eine Analyse des Bereiches bzw. des Szeneinhaltes des Bereiches aus mehreren Winkeln durchgeführt wird.

Hierdurch ist es möglich, zwischen dem Vorhandensein eines realen Objektes und einer Änderung der Beleuchtung zu unterscheiden. Dabei wird mithilfe der Mehrkameraanordnung eine Tiefeninformation über den betrachteten Bereich gewonnen.

Zur Erkennung eines Objektes wird in vorteilhafter Weise eine Differenz zwischen dem optischen Signal der ersten optischen Signalaufnahmeeinheit und dem optischen Signal der zweiten optischen Signalaufnahmeeinheit eines vorgegebenen Bereiches zweier annähernd gleichzeitig aufgenommenen Bilder gebildet und die Differenz mit einer vorgegebenen Schwelle verglichen. Ergibt der Vergleich, daß die Differenz über der vorgegebenen Schwelle liegt, so wird ein Objekt erkannt.

Das erfindungsgemäße Verfahren und die erfindungsgemäße Vorrichtung eignen sich nicht nur für die Überwachung von Straßen, sondern z.B. auch im Bereich der Sicherheitstechnik zur Überwachung eines Geländes oder eines Gebäudes und im Bereich der industriellen Automatisierung (Robotik) für die Erkennung beliebiger Objekte.

Durch die in den abhängigen Ansprüchen aufgeführten Maßnahmen sind vorteilhafte Weiterbildungen und Verbesserung des im Anspruch 1 angegebenen Verfahrens und der im Anspruch 12 angegebenen Vorrichtung möglich. Besonders gute Ergebnisse werden erzielt, wenn die erste und die zweite Signalaufnahmeeinheit die Bilder gleichzeitig aufnehmen, denn dann sind zeitliche Änderungen, die zu einer. Fehldetektion führen könnten, sicher vermieden.

Ein schnellerer Ablauf des erfindungsgemäßen Verfahrens wird dadurch erreicht, daß der Bereich in Teilbereiche, sogenannte Detektionszellen, die aus mehreren Bildpunkten bestehen, eingeteilt wird und die optischen Signale jedes Teilbereiches, z.B. Grauwerte oder Farbwerte, zu einem Signal zusammengefaßt werden und beim Vergleich des ersten Bildes mit dem zweiten Bild die zusammengefaßten Signale miteinander verglichen werden.

Eine vorteilhafte Weiterbildung des Verfahrens wird erreicht, indem mehrere Teilbereiche zu Detektionseinheiten zusammengefaßt werden und erst dann ein Objekt erkannt wird, wenn für eine vorgegebene Anzahl der Teilbereiche einer Detektionseinheit ein Objekt erkannt wurde.

Weiterhin ist es vorteilhaft, für den Bereich eine binäre Matrix abzuspeichern, die entsprechend den Teilbereichen unterteilt ist. Die Teilbereiche der binären Matrix, für die ein Objekt erkannt wurde, werden mit einer 1 und die Teilbereiche, für die kein Objekt erkannt wurde, werden mit einer 0 markiert.

Eine zusätzliche Erweiterung des erfindungsgemäßen Verfahrens wird erreicht, wenn in festgelegten Zeitabständen markierte Matrizen abgelegt werden und die Matrizen zur weiteren Verarbeitung ausgegeben oder übertragen werden.

Eine einfache Auswertung der Bilder der optischen Signalaufnahmeeinheiten wird dadurch erreicht, daß in einem Speicher für den Aufnahmebereich jeder optischen Signalaufnahmeeinheit ein Koordinatensystem abgelegt ist. Zudem ist in dem Speicher eine Zuordnungsvorschrift abgelegt, die festlegt, welche Punkte des Koordinatensystems der ersten optischen Signalaufnahmeeinheit welchen Punkten des Koordinatensystems der zweiten optischen Signalaufnahmeeinheit entsprechen.

Auf diese Weise ist eine direkte Zuordnung des gemeinsamen Bereiches, der von beiden Signalaufnahmeeinheiten aufgenommen wird, möglich. Somit können für jeden Punkt des gemeinsamen Bereiches das Bildsignal der ersten optischen Signalaufnahmeeinheit mit dem Bildsignal der zweiten optischen Signalaufnahmeeinheit verglichen werden.

Eine vorteilhafte Ausbildung der erfindungsgemäßen Vorrichtung besteht darin, als optische Signalaufnahmeeinheiten bildgebende Einheiten, insbesondere Videokameras oder Zeilensensoren zu verwenden, wobei eine besonders gute Detektion von Objekten mit Schwarz-Weiß- oder Farb- oder Infrarotkameras erreicht wird.

Weiterhin ist es vorteilhaft, daß durch die Vorgabe einer geometrischen Anordnung von Detektionszellen Muster bei der Erkennung von Objekten vorgegeben werden. Zudem ist es vorteilhaft, daß nach der Vorgabe eines Musters ein Objekt nur erkannt wird, wenn für die Detektionszellen, die dem vorgegebenen Muster entsprechen, ein Objekt erkannt worden ist. Auf diese Weise wird die Erkennung eines Objektes auf vorgegebene Größen bzw. Formen eingeschränkt. Somit kann z.B. sicher zwischen einem Pkw, einem Lkw oder einem Motorrad unterschieden werden.

Eine zusätzliche vorteilhafte Weiterbildung besteht darin, in dem gemeinsamen Bereich mit Hilfe der Detektionszellen zwei oder mehr parallele Detektionslinien anzuordnen, die z.B. quer zu einer Fahrbahn verlauten. Durch Verwendung der parallelen Detektionslinien, deren Abstand auf der Straße bekannt ist, ist es möglich, die Geschwindigkeit eines detektierten Objektes und die Länge des Objektes zu ermitteln.

Zeichnung

Ein Ausführungsbeispiel der Erfindung ist in der Zeichnung dargestellt und in der nachfolgenden Beschreibung näher erläutert. Es zeigen

  Figur 1 eine Kameraanordnung ohne Objekt,
  Figur 2 eine Kameraanordnung, wobei ein Objekt in einem Aufnahmestrahl einer Kamera angeordnet ist,
  Figur 3 eine Kameraanordnung, wobei ein Objekt in den Aufnahmestrahlen zweier Kameras angeordnet ist,
  Figur 4 eine Kameraanordnung mit einer Aufnahme- und Auswerteeinheit,
  Figur 5 eine Aufnahme- und Auswerteeinheit,
  Figur 6 zwei Kamerabilder,
  Figur 7 eine Detektionszelle,
  Figur 8 ein Detektionsfeld,
  Figur 9 einen schematischen Programmablauf und Figur 10 eine Tabelle.

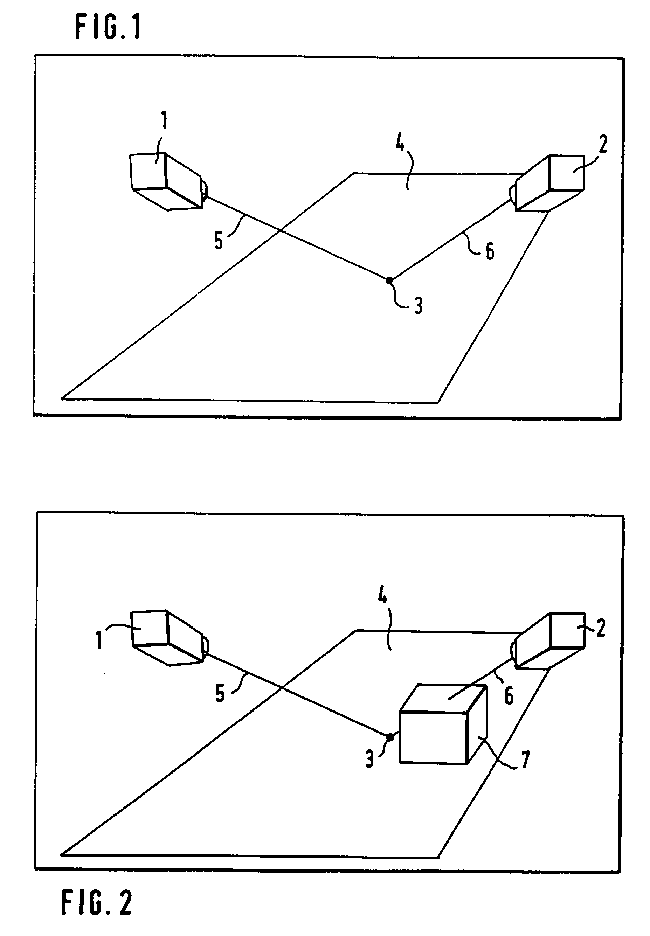

Figur 1 zeigt eine Anordnung von zwei optischen Signalaufnahmeeinheiten 1, 2, die in einem festgelegten Abstand zueinander angeordnet sind und deshalb eine Ebene 4 aus verschiedenen Blickwinkeln aufnehmen. Die optischen Signalaufnahmeeinheiten sind z.B. als Videokameras 1, 2 ausgebildet. Es sind jedoch auch andere optische Signalaufnahmeeinheiten wie z. B. Zeilensensoren anwendbar.

In Figur 1 nimmt eine erste Videokamera 1 einen Bildpunkt 3 der Ebene 4 aus einem anderen Blickwinkel auf als eine zweite Videokamera 2. Dies ist in Figur 1 schematisch durch den ersten Aufnahmestrahl 5 der ersten Videokamera 1 und den weiten Aufnahmestrahl 6 der zweiten Videokamera 2 dargestellt, die von den Videokameras 1, 2 zu dem Bildpunkt 3 geführt sind. In dieser Anordnung nehmen die Videokameras 1, 2 gleiche Bildsignale d.h. z.B. gleiche Grauwerte oder gleiche Farbwerte vom Bildpunkt 3 auf.

Figur 2 zeigt eine veränderte Aufnahmesituation, wobei ein Objekt 7 in den zweiten Aufnahmestrahl 6 der zweiten Videokamera 2 eingebracht ist. Bei dieser Aufnahmeanordnung nimmt die erste Videokamera 1 über den ersten Aufnahmestrahl 5 ein anderes Bildsignal vom ersten Bildpunkt 3 auf als die zweite Videokamera 2 über den zweiten Aufnahmestrahl 6. Da sich der Bildpunkt 3 und das Objekt 7 in der Form und/oder der Farbe und/oder der Helligkeit unterscheiden, erhalten die erste Videokamera 3 und die zweite Videokamera 2 für die auf den Bildpunkt 3 gerichteten Aufnahmestrahlen 5, 6 unterschiedliche Aufnahmewerte, wie z.B. unterschiedliche Helligkeiten. Auf diese Weise wird mit Hilfe der beiden Videokameras 1,2 der Nachweis des Objektes 7 ermöglicht.

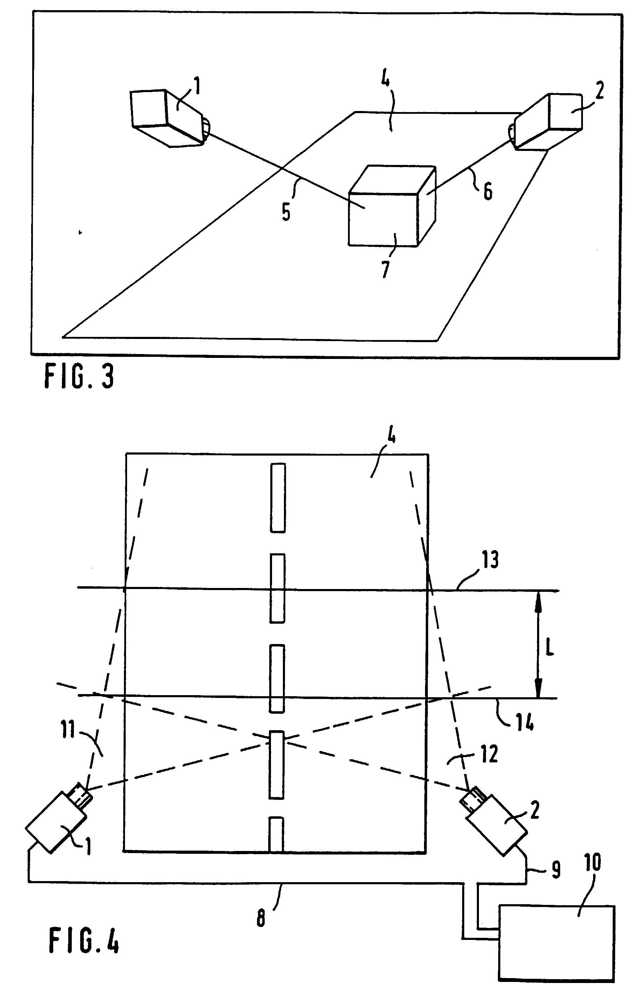

Figur 3 zeigt eine weitere Aufnahmeanordnung, wobei das Objekt 7 in den ersten Aufnahmestrahl 5 und den zweiten Aufnahmestrahl 6 der ersten bzw. der zweiten Videokamera 1, 2 eingebracht ist. Da der erste und der zweite Aufnahmestrahl 5, 6 an verschiedenen Punkten auf das Objekt 7 auftreffen, erhalten die erste und zweite Videokamera 1, 2 unterschiedliche Aufnahmewerte, die sich z.B. in der Helligkeit unterscheiden. Somit ist auch bei dieser Aufnahmeanordnung der Nachweis des Objektes 7 möglich.

Anhand der Figuren 1 bis 3 wurde das Grundprinzip des Nachweises eines Objektes 7 mit Hilfe von mindestens zwei optischen Signalaufnahmeeinheiten 1,2 dargestellt. Selbstverständlich können anstelle der zwei optischen Signalaufnahmeeinheiten 1,2 auch mehrere optische Signalaufnahmeeinheiten 1,2 angeordnet werden.

Figur 4 zeigt eine Aufnahmeanordnung für eine Ebene 4, die als Fahrbahn ausgebildet ist. Die optischen Signalaufnahmeeinheiten sind als erste und zweite Videokamera 1,2 ausgebildet. Die erste Videokamera 1 ist über eine erste Daten- und Steuerleitung 8 und die zweite Videokamera 2 ist über eine zweite Daten- und Steuerleitung 9 mit einer Auswerte- und Steuereinheit 10 verbunden. Die erste Videokamera 1 ist auf der linken Seite und die zweite Videokamera 2 ist auf der rechten Seite neben dem Fahrbahnrand installiert. Der Aufnahmebereich der ersten Videokamera 1 und der Aufnahmebereich der zweiten Videokamera 12 sind schematisch in Form eines ersten bzw. zweiten Aufnahmetrichters 11, 12 dargestellt, die gestrichelt eingezeichnet sind.

Die erste und die zweite Videokamera 1, 2 nehmen die Fahrbahn 4 aus verschiedenen Blickwinkeln auf. Die erste und die zweite Videokamera 1, 2 sind so montiert, daß ein möglichst großer Bereich der zu überwachenden Fahrbahn 4 in beiden Videokameras 1, 2 gleichzeitig aufgenommen wird. Die Brennweite der Videokameraobjekte und die Ausrichtung der Videokameras 1, 2 ist so gewählt, daß innerhalb einer vorgegebenen Länge L der gesamte Querschnitt der Fahrbahn 4 von beiden Videokameras 1,2 erfaßt wird. Grundsätzlich kann nur der Bereich, der von beiden Videokameras 1, 2 aufgenommen wird, für die Detektion eines Objektes verwendet werden. Der gemeinsame Aufnahmebereich der beiden Videokameras 1, 2 liegt auf der Fahrbahn 4 zwischen einer ersten Detektionslinie 13 und einer zweiten Detektionslinie 14, die voneinander einen vorgegebenen Abstand L aufweisen. Die erste Detektionslinie 13 und die zweite Detektionslinie 14 sind parallel zueinander angeordnet und senkrecht zur Fahrbahn 4 ausgerichtet.

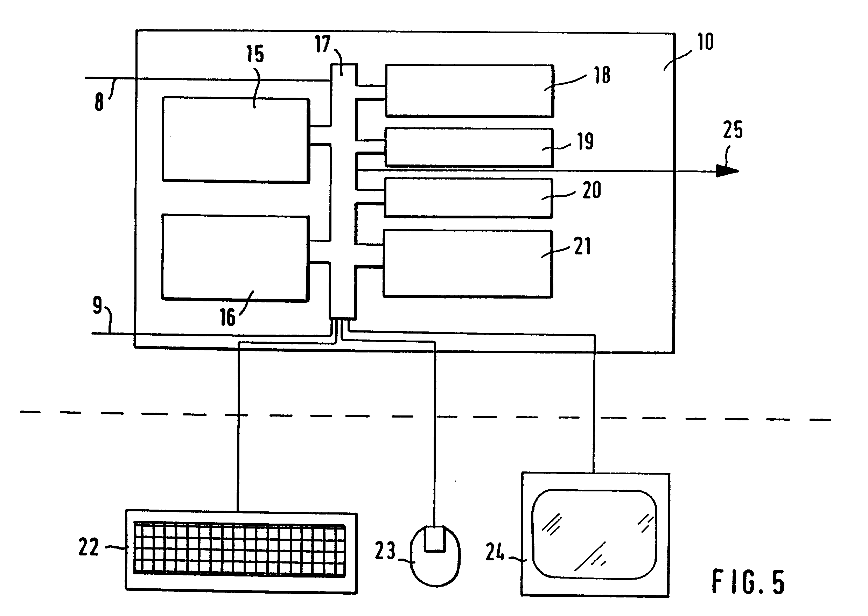

Figur 5 zeigt eine Auswerte- und Steuereinheit 10 mit peripheren Eingabegeräten 22, 23 und einer Ausgabeeinheit 24. Die Aufnahme- und Auswerteeinheit 10 weist einen Mikroprozessor 18, einen flüchtigen Arbeitsspeicher (RAM) 19, einen Festwertspeicher (ROM) 20, ein Disketten- oder Festplattenlaufwerk 21, einen ersten Videodigitalisierer 15 und einen zweiten Videodigitalisierer 16 auf. Die Bauteile 18, 19, 20, 21, 15, 16 der Aufnahme- und Auswerteeinheit 10 sind über ein Bussystem 17 untereinander verbunden. An das Bussystem 17 sind die erste und die zweite Daten- und Steuerleitung 8, 9 angeschlossen. Ebenso ist eine Ausgangsschnittstelle 25 an das Bussystem 17 angeschlossen. Zugleich ist die Aufnahme- und Auswerteeinheit 10 derart ausgebildet, daß Eingabeeinheiten 22, 23 z.B. in Form einer Tastatur 22 und einer Maus 23 und eine Ausgabeeinheit 24, die z.B. als Monitor ausgebildet ist, an das Bussystem 17 angeschlossen werden können.

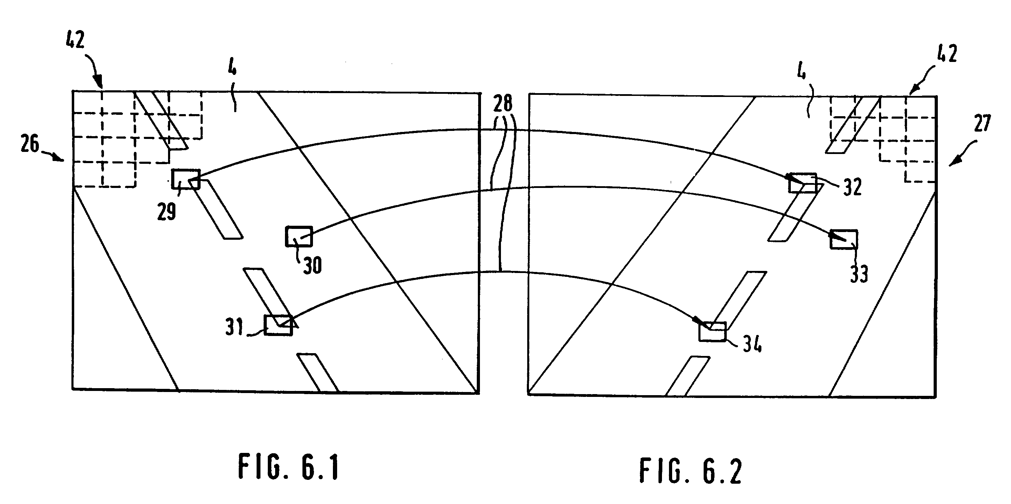

Figur 6.1 zeigt einen ersten Bildausschnitt 26, den die erste Videokamera 1 aufnimmt und der auf dem Monitor 24 dargestellt wird. Im ersten Bildausschnitt 26 ist eine Fahrbahn 4 enthalten, in der ein erster Bildbereich 29, ein zweiter Bildbereich 30 und ein dritter Bildbereich 31 eingezeichnet sind.

Figur 6.2 zeigt einen zweiten Bildausschnitt 27, der von der zweiten Videokamera 2 aufgenommen wird und auf dem Monitor 24 ebenfalls dargestellt wird. Im zweiten Bildausschnitt 27 ist die Fahrbahn 4 ebenfalls enthalten. In der Fahrbahn 4 ist ein vierter Bildbereich 32, ein fünfter Bildbereich 33 und ein sechster Bildbereich 34 eingezeichnet.

Der erste Bildbereich 29 des ersten Bildausschnittes 26 entspricht dem vierten Bildbereich 32 des zweiten Bildausschnittes 27. Ebenso entspricht der zweite Bildausschnitt 30 des ersten Bildausschnittes 26 dem fünften Bildausschnitt 33 des zweiten Bildausschnittes 27 und der dritte Bildausschnitt 31 des ersten Bildausschnittes 26 dem sechsten Bildausschnitt 34 des zweiten Bildausschnittes 27. Der erste Bildausschnitt 26 und der zweite Bildausschnitt 27 sind vorzugsweise über die gesamte Fläche in Bildbereiche 42 eingeteilt, wie ausschnittweise in den Figuren 6.1 und 6.2 dargestellt ist.

Da die Videokameras 1, 2 die Fahrbahn 4 aus unterschiedlichen Blickwinkeln aufnehmen und somit ein Bereich der Fahrbahn 4 im ersten und zweiten Bildausschnitt 26, 27 an verschiedenen Positionen steht, ist es für die Auswertung der Aufnahmen der Videokameras 1, 2 notwendig, daß die Aufnahme- und Steuerein-

heit 10 Zuordnungsfunktionen 28 der Bildbereiche des ersten und zweiten Bildausschnittes 25, 27 bekannt sind. Die Zuordnungsfunktionen 28 sind für den ersten, zweiten, dritten, vierten, fünften und sechsten Bildbereich 29, 30, 31, 32, 33, 34 schematisch in Form von Pfeilen in den Figuren 6.1 und 6.2 eingezeichnet. Die Zuordnungsfunktionen sind in der Auswerte- und Steuereinheit 10 im Arbeitsspeicher 19 abgelegt.

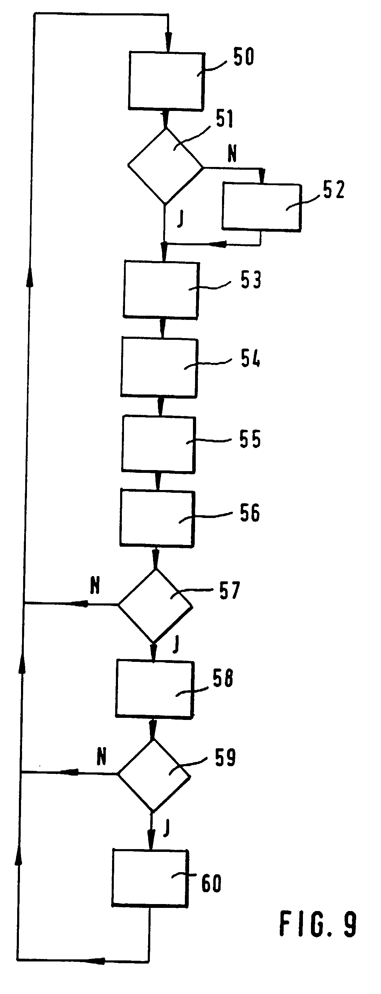

Im folgenden wird anhand des schematischen Programmablaufes der Figur 9 das erfindungsgemäße Verfahren erläutert: Die Beschreibung des Ausführungsbeispiels wird anhand einer Fahrbahn 4 erläutert, wobei jedoch damit keine Einschränkung auf die Fahrbahn vorgenommen werden soll.

Die in Figur 4 dargestellte Kameraanordnung, die aus der ersten und der zweiten Videokamera 1, 2 besteht, überwacht einen Fahrbahnausschnitt, der die gesamte Breite der Fahrbahn 4 umfaßt und eine Länge L aufweist. Die erste und zweite Videokamera 1, 2 sind räumlich so weit voneinander aufgestellt, daß unterschiedliche Ansichten des gleichen Bereiches (derselben Szene) aufgenommen werden und somit der dreidimensionale Charakter des beobachteten Bereiches erfaßt wird. Bei Programmpunkt 50 nimmt die erste Videokamera 1 ein erstes Bild und die zweite Videokamera 2 ein zweites Bild auf. Zur Erzielung einer hohen Detektionsgenauigkeit sind vorzugsweise beide Videokameras miteinander synchronisiert, so daß für jedes erste Bild, das die erste Videokamera 1 aufnimmt, ein entsprechendes zweites Bild vorliegt, das zum gleichen Zeitpunkt von der zweiten Videokamera 2 aufgenommen wurde.

Die Bildsignale der beiden Videokameras 1, 2 werden der Auswerte- und Steuereinheit 10 zugeführt. Dabei werden die analogen Bildsignale der beiden Videokameras 1, 2 mittels Videodigitalisierer 15, 16 digitalisiert und anschließend im Arbeitsspeicher 19 abgelegt. Dabei wird der Grauwert jedes einzelnen Bildpunktes wird in eine digitale Zahl umgewandelt, die im Arbeitsspeicher 19 abgelegt wird. Die Digitalisierung der Bildsignale erfolgt unter Kontrolle eines entsprechenden Steuerprogrammes, das vom Mikroprozessor 18 abgearbeitet wird. Dabei ist es von besonderem Vorteil, daß der Belichtungszeitpunkt für beide Videokameras 1,2 exakt übereinstimmt. Aus diesem Grund werden sogenannte "Genlock"-fähige Videokameras verwendet. Ferner ist es vorteilhaft, für jede der beiden Videokameras 1, 2 die gleiche Einstellung von Blende, Belichtungszeit und interner Kameraverstärkung zu wählen, damit die digitalisierten Grauwerte beider Bilder exakt vergleichbar sind.

Da beide Videokameras 1, 2 den gleichen Straßenabschnitt beobachten, existiert zu jedem Bildpunkt der Fahrbahn 4, der zwischen der ersten und der zweiten Detektionslinie 13, 14 liegt, ein Bildpunkt im ersten Bildausschnitt 26 der ersten Videokamera 1 und ein entsprechender Bildpunkt im zweiten Bildausschnitt 27 der zweiten Videokamera 2. Da die Koordinaten dieser zwei korrespondierenden Bildpunkte bzw. Bildbereiche im Bezugsraster des ersten und des zweiten Bildausschnittes 26, 27 in der Regel nicht identisch sind, da beide Videokameras 1, 2 aus einem anderen Blickwinkel den gemeinsamen Bereich abbilden, ist eine einmalige Initialisierung notwendig, in der die Koordinaten der Bildpunkte des ersten und zweiten Bildausschnittes einander zugeordnet werden, d.h. Zuordnungsfunktionen 28 ermittelt werden.

Bei Programmpunkt 51 erfolgt die Abfrage, ob eine Initialisierung schon durchgeführt worden ist. Ist dies der Fall, so wird nach Programmpunkt 53 verzweigt, ansonsten wird nach Programmpunkt 52 verzweigt. Bei Programmpunkt 52 werden die Zuordnungsfunktionen 28 folgendermaßen ermittelt:

Die Zuordnungsfunktionen 28 werden für jeden Bildpunkt des ersten Bildausschnittes zu den Bildpunkten des zweiten Bildausschnittes 27 ermittelt. Je nach Aufstellung der Kameras existieren allerdings im Bereich der Ränder des ersten und zweiten Bildausschnittes 26, 27 stets einige Bildpunkte, für die sich diese Korrespondenz nicht herstellen läßt. Diese Punkte werden von der weiteren Analyse ausgeschlossen. Die Zuordnungsfunktionen 28 zwischen allen Paaren von betrachteten Bildpunkten liegen fest und sind durch folgende Einflußgrößen bestimmt:

　　1: Der geometrische Ort des betrachteten Bildpunktes in dem gemeinsamen Bereich,
　　2: die Aufstellungsorte der beiden Kameras und die Blickrichtung der Kameras,
　　3: die optischen Parameter der Kameras (Brennweite) und die Rasterkoordinaten, die in den Videobildern durch den Vorgang der Digitalisierung aufgespannt werden.

Die Zuordnung der Bildpunkte kann im Prinzip Punkt für Punkt manuell durchgeführt werden. Durch eine halbautomatische oder vollautomatische Zuordnung kann eine wesentliche Vereinfachung herbeigeführt werden, die jedoch keinen Einfluß auf das grundsätzliche Funktionsprinzip der Initialisierung hat.

Zunächst wird ein einzelner Bildpunkt bzw. Bildbereich, der von beiden Videokameras 1, 2 aufgenommen wird, auf einem Monitor 24 betrachtet. Dabei wird z.B. der erste Bildbereich 29 des ersten Bildausschnittes 26 mit einer Maus 23 auf dem Monitor 24 markiert. Anschließend wird im zweiten Bildausschnitt 27 der dem ersten Bildbereich 29 entsprechende vierte Bildbereich 32 gesucht und ebenfalls mit der Maus 23 im Monitor 24 markiert. Die Koordinaten der beiden Bildbereiche werden anschließend ermittelt und in einer Tabelle 100 im Arbeitsspeicher 19 abgelegt. Eine Zuordnungsfunktion 28 ergibt sich aus den verschiedenen Koordinaten des ersten und vierten Bildbereiches 29,32. Auf diese Weise werden für alle Bildbereiche bzw. Bildpunkte des ersten Bildausschnittes 26 Zuordnungsfunktionen 28 zu den Bildbereichen bzw. Bildpunkten des zweiten Bildausschnittes 27 ermittelt.

Dazu werden der erste und der zweite Bildausschnitt in x-y-Koordinaten eingeteilt und die Bildpunkte bzw. die Bildbereiche in Form einer Tabelle 100 mit Angabe von x-y-Koordinaten im Arbeitsspeicher 19 abgelegt. Die Figur 10 zeigt die Tabelle 100, die in der ersten Spalte 101 zeilenweise die Bildpunkte, in der zweiten Spalte 102 die zu den Bildpunkten gehörenden x-Koordinaten und in der dritten Spalte 103 die y-Koordinaten des ersten Bildausschnittes 26. In der vierten Spalte 104 sind die x-Koordinaten und in der fünften Spalte 105 die y-Koordinaten des zweiten Bildausschnittes 27 dargestellt. Der Bildpunkt 1 hat z.B. im ersten Bildausschnitt 26 die x-Koordinate 120 und die y-Koordinate 125 und im zweiten Bildausschnittes 27 die x-Koordinate 101 und die y-Koordinate 124. Auf diese Weise werden für alle Bildpunkte bzw. Bildbereiche des gemeinsamen Bereiches die Koordinaten erfaßt. Die Zuordnungsfunktionen 28 ergeben sich aus dem Vergleich der x-y-Koordinaten eines Bildpunktes für den ersten und den zweiten Bildausschnitt 26,27.

Nachdem für alle Bildpunkte die Zuordnungsfunktionen 28 bzw. x-y-Koordinaten festgelegt worden sind, wird nach Programmpunkt 53 verzweigt.

Bei Programmpunkt 53 erfolgt der Vergleich der Grauwerte des ersten und zweiten Bildes. Im einfachsten Fall wird jeder Grauwert jedes Bildpunktes des gemeinsamen Bereiches des ersten Bildes mit dem Grauwert des entsprechenden Bildpunktes des gemeinsamen Bereiches des zweiten Bildes verglichen. Dabei wird die Differenz der Grauwerte gebildet und mit einer Schwelle, die 5% des gesamten Wertebereiches der Grauwerte beträgt, verglichen. Ist die Differenz größer als die Schwelle, so wird die Entscheidung getroffen, daß ein "Objekt erkannt" wurde, ansonsten wird die Entscheidung getroffen, daß "kein Objekt erkannt" wurde.

Der Vergleich ist auf einfache Weise möglich, da für den gemeinsamen Bereich eine Tabelle 100, abgelegt ist, anhand derer die Zuordnungsfunktionen 28 der Bildpunkte festgelegt sind.

Eine Vereinfachung des Verfahrens wird dadurch erreicht, daß die Bildsignale eines Bildbereiches 42, der einen Teilbereich darstellt, zu einem Signal zusammengefaßt werden und der gemeinsame Bereich des ersten Bildes mit dem gemeinsamen Bereich des zweiten Bildes für jeden Teilbereich verglichen wird. Das erste und das zweite Bild sind vorzugsweise entsprechend Figur 6.1 und Figur 6.2 in Bildbereiche 42, die Teilbereiche bzw. Detektionszellen darstellen, unterteilt. Ein Bildbereich 42 besteht aus einer festgelegten Anzahl von Bildpunkten.

Für jeden Bildbereich werden folgende Berechnungsschritte durchgeführt:

1. Berechne den mittleren Grauwert G1 innerhalb des Bildbereiches n des ersten Bildausschnittes 26 nach folgender Formel:

$$G1 = 1/N \sum_{i=1}^{N} bi,$$

wobei bi den Grauwert des Bildpunktes i darstellt.

2. Berechne den mittleren Grauwert G2 innerhalb des Bildbereiches m des zweiten Bildausschnittes 27 nach folgender Formel:

$$G2 = 1/N \sum_{i=1}^{N} bi,$$

wobei bi den Grauwert des Bildpunktes i darstellt.

Der Bildbereich n des ersten Bildausschnittes 26 entspricht dem Bildausschnitt m des zweiten Bildausschnittes 27.

Anschließend wird bei Programmpunkt 54 ein Absolutbetrag d der Differenz der mittleren Grauwerte G1 und G2 gemäß d=IG1-G2I berechnet.

Bei dem folgenden Programmpunkt 55 wird der Wert der Differenz d mit einer Schwelle s, die vom Benutzer vorgegeben wird, verglichen. In diesem Beispiel ist die Schwelle s mit 5% des Wertebereiches der Grauwerte festgelegt. Auf den Zustand "Objekt vorhanden" wird entschieden, wenn der Wert von d die Schwelle s überschreitet. Der Wert, der für die Schwelle s anzusetzen ist, hängt von dem Wertebereich der digitalisierten Grauwerte des Bildes ab. Beispielsweise sollte die Schwelle s zwischen 5 und 20 Quantisierungsstufen liegen, wenn die Bilder mit 256 Grauwerten quantisiert werden.

Der beschriebene Detektionsvorgang wird für jedes Bildpaar in allen definierten Bildbereichen bzw. Detektionszellen durchgeführt. Es ergeben sich somit für jedes Bildpaar N Detektionsergebnisse, wenn N Detektionszellen definiert worden sind.

Für jeden der Bildbereiche 42 wird durch den Vergleich der Grauwertdifferenzen, die auf den Grauwerten der betrachteten Bildbereiche beruhen, ermittelt, ob die Bildbereiche von einem Objekt verdeckt sind oder nicht.

Bei dem folgenden Programmpunkt 56 wird für jeden Bildbereich 42 ein logischer Wert aus dem Wertevorrat (0,1) ausgewählt, wobei der Wert 0 dem Zustand "kein Objekt im Bildbereich" und der Wert 1 dem Zustand "Objekt im Bildbereich" entspricht. Die berechneten Detektionsergebnisse werden entweder ohne weitere Verarbeitung am Ausgang der Auswerte- und Steuereinheit 10 ausgegeben oder im Arbeitsspeicher 19 in Form einer Matrix abgelegt.

Anschließend erfolgt bei Programmpunkt 57 die Abfrage, ob die Matrix weiter verarbeitet werden soll. Ist dies nicht der Fall, so wird nach Programmpunkt 50 zurückverzweigt und es werden zwei neue erste und zweite Bilder verarbeitet.

Soll jedoch eine weitere Auswertung der Matrix erfolgen, so wird nach Programmpunkt 58 verzweigt.

Bei Programmpunkt 58 wird die Matrix ausgewertet, um z.B. Aussagen über die Art, die Anzahl, die Position und die Geschwindigkeit von Objekten zu errechnen.

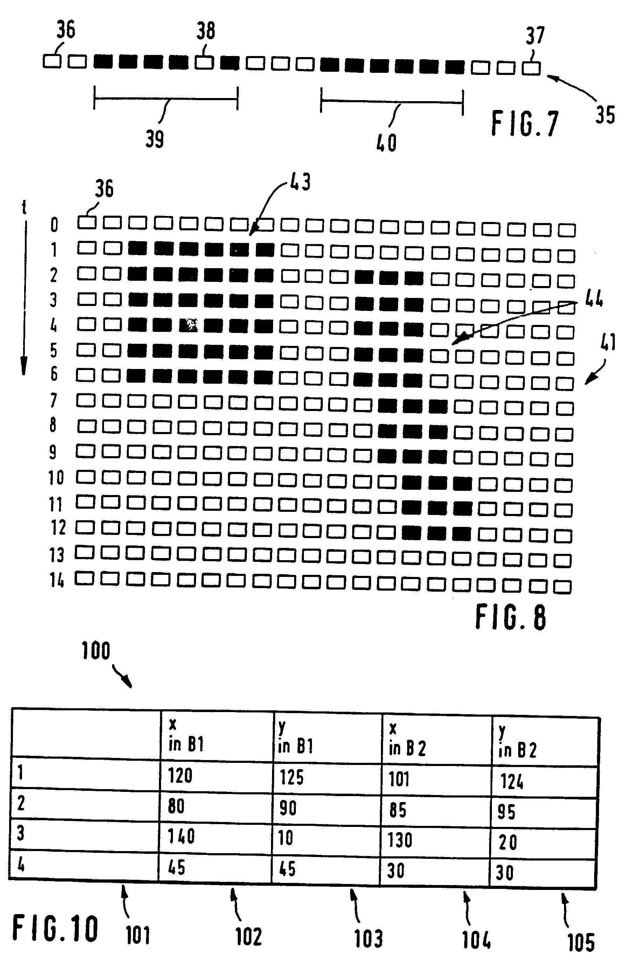

Für viele Anwendungen ist es von Vorteil, die Detektionsergebnisse zusammenzufassen. Beispielsweise kann eine vorgegebene Anzahl von Bildbereichen (Detektionszellen) der Matrix zu einer Detektionslinie 35 zusammengefaßt werden, die entlang einer Geraden quer zu Fahrbahn innerhalb einer Fahrspur liegt. Die Detektionslinie 35 stellt eine Detektionseinheit dar, die Matrix wird dann dahingehend überprüft, ob eine vorgegebene Anzahl , z.B. 4, von Detektionszellen innerhalb der Detektionslinie 35 als "Objekt detektiert" entschieden wurde. Ist dies der Fall, so wird das Ergebnis "Objekt detektiert" ausgegeben. In einer anderen Ausformung des Verfahrens, das für mehrspurige Fahrbahnen besonders geeignet ist, besteht auch die Möglichkeit, Spurwechsel nebeneinander fahrender Fahrzeuge zu erkennen. Dabei wird eine Detektionslinie 35 quer zur Fahrbahn angeordnet, wobei die Detektionszellen 36 der Detektionslinie 35 auf der Fahrbahn einen Abstand von etwa 10 bis 30 cm haben. Die Detektionslinie 35 wird als Matrix im Speicher 19 abgelegt, wie in Figur 7 dargestellt ist. Die dargestellte Detektionslinie 35 besteht aus 20 nebeneinander angeordneten Detektionszellen 36.

Die Anzahl der über dieser Linie befindlichen Objekte wird dadurch ermittelt, daß nach Gruppen von benachbarten Detektionszellen 36 gesucht wird, die alle das Detektionsergebnis "Objekt detektiert" liefern und voneinander durch mindestens eine (besser jedoch mehrere) nicht aktivierte Detektionszellen 36 getrennt sind. Die Detektionszellen, für die ein Objekt detektiert wurde, sind in Figur 7 gefüllt dargestellt. Bei der Überprüfung der Matrix der Figur 7 wird ein Objekt z.B. nur dann erkannt, wenn sechs nebeneinander angeordnete Detektionszellen als "Objekt detektiert" entschieden wurden, wie dies z.B. ein erstes Objekt 40 in Figur 7 zeigt.

Unter ungünstigen Umständen kann es jedoch dazu kommen, daß eine Detektionszelle 38, die innerhalb eines zweiten Objektes 39 liegt, nicht als "Objekt detektiert" erkannt wurde. Da in diesem Ausführungsbeispiel ein Mindestabstand von drei nicht ansprechenden Detektionszellen zwischen zwei nebeneinander fahrenden Fahrzeugen angenommen wurde, kann dieser Fehler ausgeglichen werden und ein zweites Objekt 39 in der Matrix erkannt werden, obwohl die siebte Detektionszelle 38 nicht als "Objekt detektiert" entschieden wurde.

Weiterhin ist möglich, mittels Detektionslinien 35, wie in Figur 7 dargestellt, Rückschlüsse auf die Länge und die Geschwindigkeit der Objekte zu ziehen. Werden die Detektionslinien 35 entsprechend der ersten Detektionslinie 13 und der zweiten Detektionslinie 14 der Figur 4 angeordnet und ist der Abstand L der ersten und der zweiten Detektionslinie 13, 14 bekannt, so wird die Geschwindigkeit V aus dem zeitlichen Abstand des Eintretens eines Objektes in die beiden Detektionslinien 13,14 nach folgender Formel berechnet:

v = L/dt, wobei mit dt der zeitliche Abstand (in Sekunden) des Eintretens des Objektes in die beiden Detektionslinien 13,14 und mit L der Abstand (in Metern) der Detektionslinien 13,14 in der Fahrbahnebene bezeichnet ist. Ein Schätzwert g für die Länge eines Fahrzeuges ergibt sich dann bei Betrachtung aus dem zeitlichen Abstand r zwischen dem Eintreten in eine Detektionslinie und dem Austreten aus der gleichen Detektionslinie, da die Geschwindigkeit v berechnet werden kann: g = v*r. Der Schätzwert g für die Länge des Fahrzeuges entspricht aufgrund des Blickwinkels der beiden Videokameras 1, 2 nicht genau dem exakten Wert der Länge des Fahrzeuges.

Es ist weiterhin vorteilhaft, die Detektionsergebnisse der einzelnen Detektionszellen als zeitlichen Vorgang zu visualisieren. Dazu erfolgt bei Programmpunkt 59 die Abfrage, ob eine visuelle Darstellung der abgespeicherten Matrizen erfolgen soll. Ist dies nicht der Fall, so wird nach Programmpunkt 50 zurückverzweigt, ansonsten wird nach Programmpunkt 60 verzweigt.

Bei Programmpunkt 60 werden abgespeicherte Matrizen in Form eines Detektionsfeldes über einen Monitor angezeigt, wie in Figur 8 dargestellt. In diesem Beispiel wird von einer Anordnung von Detektionslinien auf der Fahrbahn ausgegangen, wobei die Anordnung der Detektionszellen quer zur Fahrbahn verläuft.

Stellt man die Detektionsergebnisse einer Detektionslinie 35 in Abhängigkeit von der Zeit in einem Detektionsfeld 41 dar, so entsteht ein Muster von zusammenhängenden Detektionszellen, die eine Block bilden. Figur 8 verdeutlicht dies am Beispiel von 20 Detektionszellen 36, 37, die in Form einer Detektionslinie quer zu einer fahrbahn angeordnet sind. Dabei sind die Detektionsergebnisse der Detektionslinien zu bestimmten Zeitpunkten t=0 bis t=14 übereinander dargestellt. Im linken oberen Bereich des Detektionsfeldes 41 ist erkennbar, daß ein relativ breites, erstes Objekt 43 bzw. Fahrzeug im Zeitraum zwischen t=1 und t=6 die Detektionslinie verdeckt. Auf der rechten Seite des Detektionsfeldes 41 überquert ein zweites Objekt 44, das deutlich schmäler ist, die Detektionslinie im Zeitraum von t=2 bis t=11. Dabei ist erkennbar, daß das zweite Objekt 44 seine Position quer zur Fahrbahn innerhalb des Zeitraumes t=2 bis t=11 verändert hat. Durch eine Weiterverarbeitung dieses Detektionsfeldes 41 können beispielsweise Rückschlüsse auf die Breite und die laterale Position von Fahrzeugen vorgenommen werden. Durch eine Vorgabe von Mustern von Detektionszellen ist es möglich, z.B. zwischen einem Pkw, Lkw oder Motorrad zu unterscheiden. Dabei wird z.B. ein Muster für ein detektiertes Motorrad vorgegeben und nur dann die Entscheidung getroffen, daß ein Objekt erkannt wurde, wenn die Detektionszellen, die als "Objekt detektiert" entschieden wurden, dem vorgegebenen Muster entsprechen. Nach Ausgabe des Detektionsfeldes wird nach Programmpunkt 50 verzweigt.

Selbstverständlich kann die Darstellung der Matrizen unabhängig von der Bearbeitung weiterer erster und zweiter Bilder, z.B. auch gleichzeitig, erfolgen.

**Patentansprüche**

1. Verfahren zur Detektion von Objekten, insbesondere Fahrzeugen, wobei von einem Bereich ein erstes Bild (26) und von diesem Bereich annähernd gleichzeitig aus einem anderen Blickwinkel ein zweites Bild (27) aufgenommen wird, dadurch gekennzeichnet, daß für die Bildpunkte des ersten Bildes (26) mit Hilfe von zuvor ermittelten Zuordnungsfunktionen (28) korrespondierende Bildpunkte des zweiten Bildes (27) des gemeinsamen Bereiches ermittelt werden, und daß bei einem Vergleich der Grauwerte der korrespondierenden Bildpunkte des ersten und des zweiten Bildes (26, 27) das Objekt (7) für mindestens einen Teilbereich (29, 30, 31, 32, 33, 34) erkannt wird, wenn der Unterschied der Grauwerte zwischen dem ersten und dem zweiten Bild (26, 27) für den Teilbereich (29, 30, 31, 32, 33, 34) größer als eine vorgegebene Schwelle ist.

2. Verfahren nach Anspruch 1, dadurch gekennzeichnet, daß erste Bilder (26) in zeitlich festgelegten Abständen aufgenommen werden, daß zweite Bilder (27) in zeitlich festgelegten Abständen aufgenommen werden und daß jeweils ein erstes und ein zweites Bild (26, 27) gleichzeitig aufgenommen wird.

3. Verfahren nach einem der Ansprüche 1 bis 2, dadurch gekennzeichnet, daß die optischen Signale eines Teilbereiches zusammengefaßt werden und als ein Signal beim Vergleich des ersten Bildes (26) mit dem zweiten Bild (27) verwendet wird.

4. Verfahren nach einem der Ansprüche 1 bis 3, dadurch gekennzeichnet, daß mehrere Teilbereiche zu einer Detektionseinheit (35) zusammengefaßt werden und daß ein Objekt erkannt wird, wenn für eine vorgegebene Anzahl von Teilbereichen (36) einer Detektionseinheit (35) ein Objekt erkannt wurde.

5. Verfahren nach einem der Ansprüche 1 bis 4, dadurch gekennzeichnet, daß für einen Vergleich eines ersten Bildes (26) mit einem zweiten Bild (27) eine binäre Matrix, die entsprechend den Teilbereichen aufgeteilt ist, in einem Speicher (19) abgelegt wird, und daß die Teilbereiche (36), für die ein Objekt erkannt wurde, markiert werden.

6. Verfahren nach Anspruch 5, dadurch gekennzeichnet, daß in festgelegten Zeitabständen markierte Teilbereiche als Matrizen im Speicher (19) abgelegt werden, und daß die Matrizen zur weiteren Verarbeitung ausgegeben oder übertragen werden.

7. Verfahren nach einem der Ansprüche 4 bis 6, dadurch gekennzeichnet, daß die Teilbereiche einer Detektionseinheit (35), für die in Objekt erkannt wurde, mit vorgegebenen Mustern von Teilbereichen (36) verglichen werden und bei Übereinstimmung ein Objekt erkannt wird.

8. Verfahren nach einem der Ansprüche 4 bis 7, dadurch gekennzeichnet, daß eine Detektionseinheit (35) in Form einer Detektionslinie (13) quer zu einem Bereich, vorzugsweise einer Fahrbahn, angeordnet wird.

9. Verfahren nach Anspruch 8, dadurch gekennzeichnet, daß eine zweite Detektionslinie (14) in einem festgelegten Abstand zur ersten Detektionslinie (13) und parallel zur ersten Detektionslinie (13) quer über einen Bereich (4), insbesondere eine Fahrbahn, angeordnet wird, und daß aus dem zeitlichen Abstand des Eintretens eines Objektes in die erste bzw. in die zweite Detektionslinie (13, 14) die Geschwindigkeit des Objektes ermittelt wird.

10. Verfahren nach Anspruch 9, dadurch gekennzeichnet, daß aus der ermittelten Geschwindigkeit und der Dauer, während der ein Objekt in einer Detektionslinie (13, 14) erkannt wird, die Länge des Objektes ermittelt wird.

11. Anordnung zur Detektion von Objekten, insbesondere Fahrzeugen, mit einer ersten und einer zweiten optischen Signalaufnahmeeinheit (1, 2), die mit einer Auswerte- und Steuereinheit (10) verbunden sind, wobei die beiden optischen Signalaufnahmeeinheiten (2) so angeordnet sind, daß die erste und zweite optische Signalaufnahmeeinheit (1, 2) den gleichen Bereich (4) aus verschiedenen Winkeln aufnehmen, dadurch gekennzeichnet, daß die erste und die zweite optische Signalaufnahmeeinheit (1, 2) gleiche Einstellungen für den Vergleich digitalisierter Grauwerte beider Bilder aufweisen und annähernd zeitlich synchron aufnehmen, daß korrespondierende Bildpunkte bzw. Bildbereiche der ersten und zweiten optischen Signalaufnahmeeinheit (1, 2) der Auswerte- und Steuereinheit (10) zuführbar sind, daß in der Auswerte- und Steuereinheit (10) ein Speicher (19) angeordnet ist, in dem auf Grund einer einmaligen Initialisierung die Koordinaten der Bildpunkte des ersten und zweiten Bildausschnittes in einer Tabelle (100) abgelegt sind und daß die Auswerte- und Steuereinheit (10) ausgebildet ist, aus den Koordinaten von korrespondierenden Bildpunkten der beiden Signalaufnahmeeinheiten (1, 2) mit Hilfe der digitalisierten Grauwerte Zuordnungsfunktionen (28) zu bilden.

12. Anordnung nach Anspruch 11, dadurch gekennzeichnet, daß als optische Signalaufnahmeeinheiten (1, 2) Videokameras, insbesondere Schwarz-Weiß-, Farb- oder Infrarotvideokameras ausgebildet sind.

## Claims

1. Method for the detection of objects, in particular vehicles, a first picture (26) of a region and, approximately at the same time, a second picture (27) of this region from a different viewing angle, being taken, characterized in that, for the pixels in the first picture (26), corresponding pixels in the second picture (27) of the shared region being determined using previously determined allocation functions (28), and in that during a comparison of the grey values of the corresponding pixels in the first and second pictures (26, 27), the object (7) is recognized for at least one subregion (29, 30, 31, 32, 33, 34) if the difference in the grey values between the first and second pictures (26, 27) for the subregion (29, 30, 31, 32, 33, 34) is greater than a predetermined threshold.

2. Method according to Claim 1, characterized in that first pictures (26) are taken at chronologically fixed intervals, in that second pictures (27) are taken at chronologically fixed intervals, and in that a first and a second picture (26, 27) are in each case taken at the same time.

3. Method according to Claims 1 and 2, characterized in that the optical signals from a subregion are combined and used as a signal during the comparison of the first picture (26) with the second picture (27).

4. Method according to one of Claims 1 to 3, characterized in that a plurality of subregions are combined to form a detection unit (35), and in that an object is recognized if an object has been recognized for a predetermined number of subregions (36) of a detection unit (35).

5. Method according to one of Claims 1 to 4, characterized in that, for a comparison of a first picture (26) with a second picture (27), a binary matrix which is correspondingly divided into subregions is stored in a memory (19), and in that the subregions (36) for which an object has been recognized are marked.

6. Method according to Claim 5, characterized in that, at fixed chronological intervals, marked subregions are stored as matrices in the memory (19), and in that the matrices are output or transferred for further processing.

7. Method according to one of Claims 4 to 6, characterized in that the subregions of a detection unit (35), for which an object has been recognized, are compared with predetermined patterns of subregions (36), and an object is recognized in the event of agreement.

8. Method according to one of Claims 4 to 7, characterized in that a detection unit (35) in the form of a detection line (13) is arranged transversely with respect to a region, preferably a traffic lane.

9. Method according to Claim 8, characterized in that a second detection line (14) is arranged at a fixed distance from the first detection line (13) and parallel to the first detection line (13), transversely over a region (4), in particular a traffic lane, and in that the speed of the object is determined from the time difference between the entry of an object into the first and second detection lines (13, 14), respectively.

10. Method according to Claim 9, characterized in that the length of the object is determined from the speed which has been determined and the time during which an object is recognized in a detection line (13, 14).

11. Arrangement for the detection of objects, in particular vehicles, with a first and a second optical signal-acquisition unit (1, 2) which are connected to an evaluation and control unit (10), the two optical signal-acquisition units (2) being arranged in such a way that the first and second optical signal-acquisition units (1, 2) acquire the same region (4) at different angles, characterized in that the first and second optical signal-acquisition units (1, 2) have the same settings for the comparison of digitized grey values in both pictures and acquire at approximately synchronous times, in that corresponding pixels or picture regions from the first and second optical signal-acquisition units (1, 2) can be fed to the evaluation and control unit (10) in that a memory (19), in which the coordinates of the pixels of the first and second picture segments are stored in a table (100) on the basis of a one-off initialization, is arranged in the evaluation and control unit (10), and in that the evaluation and control unit (10) is designed to form allocation functions (28) from the coordinates of corresponding pixels from the two signal-acquisition units (1, 2) with the aid of the digitized grey values.

12. Arrangement according to Claim 11, characterized in that video cameras, in particular black and white, colour or infrared video cameras, are configured as the optical signal-acquisition units (1, 2).

**Revendications**

1. Procédé de détection d'objets notamment de véhicules selon lequel, à partir d'une première zone on prend une première image (26) et à partir de cette zone, sensiblement en même temps on prend une seconde image (27) suivant un autre angle de vue, caractérisé en ce que

pour les points image de la première image (26), à l'aide de fonctions d'association (28) déterminées au préalable, on détermine les points image correspondants de la seconde image (27) pour la zone commune et

en comparant les niveaux de gris des points image correspondants de la première et de la seconde image (26, 27) on reconnaît l'objet (7) pour au moins une zone partielle (29, 30, 31, 32, 33, 34) si la différence des niveaux de gris entre la première et la seconde image (26, 27) pour la zone partielle (29, 30, 31, 32, 33, 34) est supérieure à un seuil prédéterminé.

2. Procédé selon la revendication 1, caractérisé en ce qu'

- on prend des premières images (26) dans des intervalles de temps fixes
- on prend des secondes images (27) dans des intervalles de temps fixes et
- on prend simultanément chaque fois une première et une seconde image (26, 27).

3. Procédé selon l'une des revendications 1 et 2, caractérisé en ce qu'
on réunit les signaux optiques d'une zone partielle et on l'utilise comme signal pour comparer la première image (26) à la seconde image (27).

4. Procédé selon l'une des revendications 1 à 3, caractérisé en ce qu'

- on réunit plusieurs zones partielles dans une unité de détection (35) et
- on reconnaît un objet si pour un nombre prédéterminé de zones partielles (36) une unité de détection (35) a reconnu un objet.

5. Procédé selon l'une des revendications 1 à 4, caractérisé en ce que

pour une comparaison d'une première image (26) avec une seconde image (27) on enregistre une matrice binaire subdivisée en des zones partielles correspondantes, dans une mémoire (19) et

on marque les zones partielles (36) pour lesquelles un objet a été reconnu.

6. Procédé selon la revendication 5, caractérisé en ce que

- dans des intervalles de temps fixés on enregistre des zones partielles marquées comme matrices dans la mémoire (19) et
- les matrices sont émises ou transmises pour la suite de leur traitement.

7. Procédé selon l'une quelconque des revendications 4 à 6, caractérisé en ce que
les zones partielles d'une unité de détection (35) pour lesquelles un objet a été reconnu, sont comparées avec des modèles prédéterminés de zones partielles (36) et en cas de concordance un objet est reconnu.

8. Procédé selon l'une des revendications 4 à 7, caractérisé en ce qu'
une unité de détection (35) en forme de ligne de détection (13) est prévue transversalement à une zone, de préférence une voie de circulation.

9. Procédé selon la revendication 8, caractérisé en ce qu'

une seconde ligne de détection (14) est prévue à une distance fixée de la première ligne de détection (13) et en parallèle à la première ligne de détection (13) transversalement à une zone (4) notamment d'une voie de circulation et

à partir de l'intervalle de temps qui sépare l'entrée d'un objet dans la première ou dans la seconde ligne de détection (13, 14) on détermine la vitesse de l'objet.

10. Procédé selon la revendication 9, caractérisé en ce qu'
à partir de la vitesse obtenue et de la durée pendant laquelle un objet est reconnu dans une ligne de détection (13, 14), on détermine la longueur de l'objet.

11. Dispositif pour détecter des objets, notamment des véhicules, comprenant une première et une seconde unité de réception de signaux optiques (1, 2) reliées à une unité d'exploitation et de commande (10),

les deux unités de réception de signaux optiques (2) étant disposées pour que la première et la seconde unité de réception de signaux optiques (1, 2) prennent la même plage (4) sous des angles différents,

caractérisé en ce que

la première et la seconde unité de réception de signaux optiques (1, 2) présentent et reçoivent les mêmes réglages pour comparer les niveaux de gris numérisés des deux signaux sensiblement en synchronisme dans le temps,

des points image ou des plages d'image correspondantes de la première et de la seconde unité de réception de signaux optiques (1, 2) étant fournis à l'unité d'exploitation et de commande (10),

l'unité d'exploitation et de commande (10) comporte une mémoire (19) dans laquelle, sur la base d'une seule initialisation, on enregistre les coordonnées des points image d'un premier et d'un second extrait d'image dans un tableau (100) et

l'unité d'exploitation et de commande (10) est réalisée pour former des fonctions d'association (28).à partir des coordonnées des points image correspondants des deux unités de réception de signaux (1, 2) à l'aide des niveaux de gris numérisés.

12. Dispositif selon la revendication 11, caractérisé en ce que les unités de réception de signaux optiques (1, 2) sont des caméras vidéo notamment des caméras noir/blanc ou des caméras couleurs ou des caméras infrarouge.

FIG.1

FIG.2

FIG. 3

FIG.4

FIG. 5

14

FIG. 6.1

FIG. 6.2

FIG.7

FIG. 8

| | x in B1 | y in B1 | x in B2 | y in B2 |
|---|---|---|---|---|
| 1 | 120 | 125 | 101 | 124 |
| 2 | 80 | 90 | 85 | 95 |
| 3 | 140 | 10 | 130 | 20 |
| 4 | 45 | 45 | 30 | 30 |

FIG.10

16

FIG. 9